(19) Europäisches Patentamt
European Patent Office
Office européen des brevets

(11) **EP 3 594 090 A1**

(12) **EUROPEAN PATENT APPLICATION**

(43) Date of publication:
**15.01.2020 Bulletin 2020/03**

(51) Int Cl.:
***B62D 6/08*** *(2006.01)*      ***G01C 21/36*** *(2006.01)*

(21) Application number: **19185182.3**

(22) Date of filing: **09.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2018 JP 2018130527**

(71) Applicant: **JTEKT CORPORATION**
**Chuo-ku,**
**Osaka-shi, Osaka 542-8502 (JP)**

(72) Inventors:
• **MOREILLON, Maxime**
  **Osaka-shi, Osaka 542-8502 (JP)**
• **TAMURA, Tsutomu**
  **Osaka-shi, Osaka 542-8502 (JP)**
• **FUCHS, Robert**
  **Osaka-shi, Osaka 542-8502 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(54) **CONTACT STATE DETECTION DEVICE, CONTACT STATE DETECTION METHOD, AND PROGRAM**

(57)    A contact state detection device that detects the state of contact with a steering wheel of a vehicle steering device includes: a torque sensor that detects torque generated in a steering shaft; a rotational angle sensor that detects the amount of rotation of the steering wheel; a contact sensor that detects whether or not the steering wheel is contacted; and a determination unit that determines which of a hands-on state and a hands-off state is established for the steering wheel based on the results of detection by the torque sensor, the rotational angle sensor, and the contact sensor.

*FIG. 2*

EP 3 594 090 A1

**Description**

BACKGROUND OF THE INVENTION

1. Field of the Invention

The present invention relates to a contact state detection device, a contact state detection method, and a program that detect the state of contact with a steering member.

2. Description of the Related Art

In recent years, there has been studied a technique of detecting the state of contact of a driver with a steering member such as a steering wheel, in order to control a vehicle. For example, Japanese Patent Application Publication No. 2018-1907 (JP 2018-1907 A) discloses a gripping state detection device that detects the state of a driver gripping a steering wheel based on the result of detection of contact with the steering wheel by a touch sensor and the result of detection of steering torque by a torque sensor, irrespective of the position of the gripping by the driver. The gripping state detection device detects the driver gripping a portion of the steering wheel at which the touch sensor is formed, using the touch sensor. The gripping state detection device detects the driver gripping a portion of the steering wheel other than the portion thereof at which the touch sensor is formed, by the torque sensor detecting steering input.

The gripping state detection device according to JP 2018-1907 A detects gripping by the driver using detection of contact by the touch sensor and detection of steering input by the torque sensor separately. For example, the touch sensor occasionally detects contact of an object other than a hand of the driver. The torque sensor normally detects steering torque by detecting the amount of twist of a torsion bar of a steering shaft. Therefore, the torque sensor occasionally detects residual torque of the torsion bar as steering torque even in a state in which the driver is not gripping the steering wheel. Therefore, the gripping state detection device according to JP 2018-1907 A may cause an erroneous detection.

SUMMARY OF THE INVENTION

It is an object of the present invention to provide a contact state detection device, a contact state detection method, and a program that improve the precision of detection of the state of contact with a steering member.

An aspect of the present invention provides a contact state detection device that detects a state of contact with a steering member of a vehicle steering device. The contact state detection device includes: a torque detection unit that detects torque generated in the steering member; a rotation amount detection unit that detects an amount of rotation of the steering member; a contact detection unit that detects whether or not the steering member is contacted; and a determination unit that determines which of a hands-on state and a hands-off state is established for the steering member, based on results of detection by the torque detection unit, the rotation amount detection unit, and the contact detection unit.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a schematic diagram illustrating an example of the configuration of a vehicle steering device that includes a contact state detection device according to a first embodiment;
FIG. 2 is a block diagram illustrating an example of the functional configuration of the contact state detection device according to the first embodiment;
FIG. 3 is a flowchart illustrating an example of operation of the contact state detection device according to the first embodiment to detect a state of contact;
FIG. 4 is a block diagram illustrating an example of the functional configuration of a contact state detection device according to a second embodiment;
FIG. 5 is a block diagram illustrating an example of the flow of a process performed by various constituent elements of the contact state detection device according to the second embodiment;
FIG. 6 is a flowchart illustrating an example of operation of the contact state detection device according to the second embodiment to detect a state of contact;
FIG. 7 is a block diagram illustrating an example of the functional configuration of a contact state detection device according to a third embodiment; and

FIG. 8 is a flowchart illustrating a part of operation of the contact state detection device according to the third embodiment to detect a state of contact.

DETAILED DESCRIPTION OF EMBODIMENTS

A contact state detection device etc. according to embodiments will be described below while referring to the drawings. The embodiments to be described below indicate comprehensive or specific examples. The numerical values, shapes, materials, constituent elements, arrangement positions of the constituent elements, connections between the constituent elements, steps (processes), order of the steps, etc. indicated in the following embodiments are exemplary, and are not intended to limit the present invention. Among the constituent elements in the following embodiments, those constituent elements that are not defined in the independent claims indicating the broadest concept are described as optional constituent elements. The drawings are schematic, and are not necessarily prepared in exact detail. In the drawings, further, substantially identical constituent elements are given identical reference numerals, and repetitive descriptions are occasionally omitted or simplified.

The configuration of a contact state detection device 100 according to a first embodiment of the present invention and a vehicle steering device 1 that includes the contact state detection device 100 will be described. In the present embodiment, the contact state detection device 100 is provided in the vehicle steering device 1 that is mounted on a vehicle. Examples of the vehicle include an automobile, a truck, a bus, a two-wheeled vehicle, a carrier vehicle, a railway vehicle, a construction machine, a farming machine, and a cargo handling machine. In the present embodiment, the vehicle is an automobile, and the automobile may be any of a vehicle that includes an engine, a hybrid vehicle that includes an engine and a motor, and an electric vehicle that does not include an engine but that includes a motor.

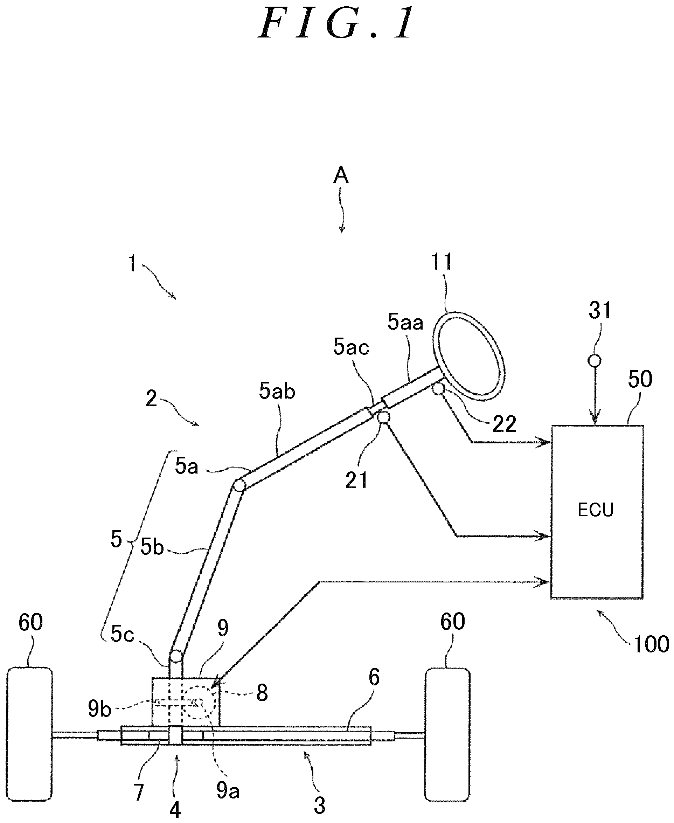

FIG. 1 is a schematic diagram illustrating an example of the configuration of the vehicle steering device 1 that includes the contact state detection device 100 according to the first embodiment. As illustrated in FIG. 1, the vehicle steering device 1 is a steering device mounted on a vehicle A to provide assist torque for steering using a rotational drive force of a motor. The vehicle steering device 1 includes a steering mechanism 2, a steered mechanism 3, and an assist mechanism 4. The steering mechanism 2 is operated by a driver of the vehicle A. The steered mechanism 3 steers steered wheels 60 in response to input to the steering mechanism 2 by the driver. The assist mechanism 4 assists the driver in steering. The steered wheels 60 are wheels for steering the vehicle A.

The steering mechanism 2 includes a steering shaft 5 connected to a steering wheel 11. In the case of the present embodiment, the steering shaft 5 is composed of a column shaft 5a, an intermediate shaft 5b, and a pinion shaft 5c. The column shaft 5a, the intermediate shaft 5b, and the pinion shaft 5c are coupled to each other in this order via universal joints so as to be rotatable in a bent state at respective end portions. The column shaft 5a is connected to the steering wheel 11. The pinion shaft 5c is connected to a rack shaft 6 of the steered mechanism 3 to be discussed later. The steering wheel 11 and the steering shaft 5 are examples of a steering member.

The steered mechanism 3 includes the rack shaft 6 that is connected to the steered wheels 60, and a rack-and-pinion device 7. The rack-and-pinion device 7 converts rotation of the pinion shaft 5c into reciprocal motion of the rack shaft 6. The steered mechanism 3 converts a rotational drive force transferred from the pinion shaft 5c into a linear drive force of the rack shaft 6, transfers the linear drive force to the steered wheels 60, and turns the steered wheels 60 in the steered direction.

The assist mechanism 4 includes a motor 8 and a speed reducer 9. The motor 8 applies a steering assist force to the steering shaft 5. The speed reducer 9 transfers a rotational drive force of the motor 8 to the steering shaft 5. The motor 8 operates under control by an electronic control unit (ECU) 50 to be discussed later. The speed reducer 9 is a device connected to the motor 8 and configured to apply an assist force for assisting steering to the steering shaft 5 using the motor 8 as a drive source. The speed reducer 9 transfers the rotational drive force of the motor 8 to the steering shaft 5 while reducing the rotational speed and enhancing the rotational drive force. Examples of the motor 8 include an electric motor. Examples of the speed reducer 9 include a worm speed reducer. The worm speed reducer has a worm shaft 9a rotationally driven by the motor 8, and a worm wheel 9b that rotates together with the steering shaft 5. The worm shaft 9a is a screw-like gear that has spiral teeth on the outer peripheral surface thereof. The worm wheel 9b is a disk-shaped gear that has a plurality of teeth on the outer periphery thereof. The teeth of the worm shaft 9a with a smaller diameter and the teeth of the worm wheel 9b with a larger diameter are meshed with each other.

In the case of the present embodiment, the speed reducer 9 is connected to the pinion shaft 5c. However, the speed reducer 9 may be connected to the column shaft 5a or the intermediate shaft 5b, or may be connected to the rack shaft 6.

The column shaft 5a includes an input shaft portion 5aa, an output shaft portion 5ab, and a torsion bar portion 5ac. The input shaft portion 5aa is connected to the steering wheel 11. A steering force of the driver is input from the steering wheel 11 to the input shaft portion 5aa. The output shaft portion 5ab is connected to the intermediate shaft 5b, and transfers the steering force of the driver that is input from the steering wheel 11 to the intermediate shaft 5b. The torsion bar portion 5ac is disposed between the input shaft portion 5aa and the output shaft portion 5ab, and transfers the steering force that is input to the input shaft portion 5aa to the output shaft portion 5ab. The torsion bar portion 5ac is configured to be lower in rigidity in the direction of twist about the axis thereof than the input shaft portion 5aa and the output shaft portion 5ab. Examples of the material that constitutes the torsion bar portion 5ac include spring steel. When a steering force is input to the input shaft portion 5aa, the torsion bar portion 5ac transfers the steering force to the output shaft portion 5ab while being twisted about the axis of the torsion bar portion 5ac.

The vehicle steering device 1 includes a torque sensor 21 that detects steering torque applied to the steering shaft 5 via the steering wheel 11 by the driver. The torque sensor 21 is disposed in the torsion bar portion 5ac, and detects torque by detecting the amount of twist of the torsion bar portion 5ac, that is, the relative rotational angle between the input shaft portion 5aa and the output shaft portion 5ab. The torque detected by the torque sensor 21 corresponds to steering torque applied to the steering wheel 11 by the driver for steering. The torque sensor 21 transmits a detection signal to the ECU 50. The torque sensor 21 is an example of a torque detection unit.

The vehicle steering device 1 further includes a rotational angle sensor 22 that detects the rotational angle of the input shaft portion 5aa. The rotational angle sensor 22 is disposed in the input shaft portion 5aa, and detects the amount of rotation, that is, the rotational angle, of the input shaft portion 5aa about the axis thereof. The rotational angle detected by the rotational angle sensor 22 corresponds to the steering angle applied to the steering wheel 11 by the driver for steering. The rotational angle sensor 22 transmits a detection signal to the ECU 50. The rotational angle sensor 22 is an example of a rotation amount detection unit.

The vehicle steering device 1 further includes a contact sensor 23 provided at a rim portion (also referred to as a "grip portion") 11a (not illustrated) of the steering wheel 11 to detect whether or not an object contacts the steering wheel 11. Examples of the contact sensor 23 include a pressure sensor, a capacitance sensor, an electrode pair, and an electrically conductive paint or sheet. The contact sensor 23 may be disposed over the entire circumference of the rim portion 11a in a circular shape, or may be disposed in a part of the entire circumference thereof such as a portion frequently gripped by the driver. The contact sensor 23 transmits a detection signal to the ECU 50. The contact sensor 23 is an example of a contact detection unit.

The vehicle steering device 1 includes the ECU 50. The ECU 50 is electrically connected to the motor 8, the torque sensor 21, the rotational angle sensor 22, the contact sensor 23, etc. Further, the ECU 50 is electrically connected to a vehicle speed sensor 31 mounted on the vehicle A, and acquires a signal that indicates a vehicle speed that is the speed of the vehicle A from the vehicle speed sensor 31. The ECU 50 controls a current to be supplied to the motor 8 based on the signals for torque and the vehicle speed acquired from the torque sensor 21 and the vehicle speed sensor 31, in order to control an assist force that the motor 8 provides to the pinion shaft 5c. The ECU 50 detects the state of contact of the driver with the steering wheel 11 based on the signals for torque, the rotational angle, and whether or not the steering wheel 11 is contacted that are acquired from the torque sensor 21, the rotational angle sensor 22, and the contact sensor 23, respectively. Specifically, the ECU 50 determines which of a hands-on state in which the driver is gripping the steering wheel 11 and a hands-off state in which the driver is not gripping the steering wheel 11 is established. The ECU 50 will be discussed in detail later. The ECU 50, the torque sensor 21, the rotational angle sensor 22, and the contact sensor 23 constitute the contact state detection device 100 according to the present embodiment.

The ECU 50 may be constituted of a microcomputer that includes a processor such as a central processing unit (CPU) or a digital signal processor (DSP), and a memory. Examples of the memory may include a volatile memory such as a random access memory (RAM) and a non-volatile memory such as a read only memory (ROM). Some or all of the functions of the ECU 50 may be achieved by the CPU executing a program stored in the ROM using the RAM as a working memory. Some or all of the functions of the ECU 50 may be achieved by a dedicated hardware circuit such as an electronic circuit or an integrated circuit. Some or all of the functions of the ECU 50 may be achieved by a combination of the software function and the hardware circuit described above. The ECU 50, the motor 8, and the various sensors described above may communicate with each other via an in-vehicle network such as controller area network (CAN) and a local interconnect network (LIN).

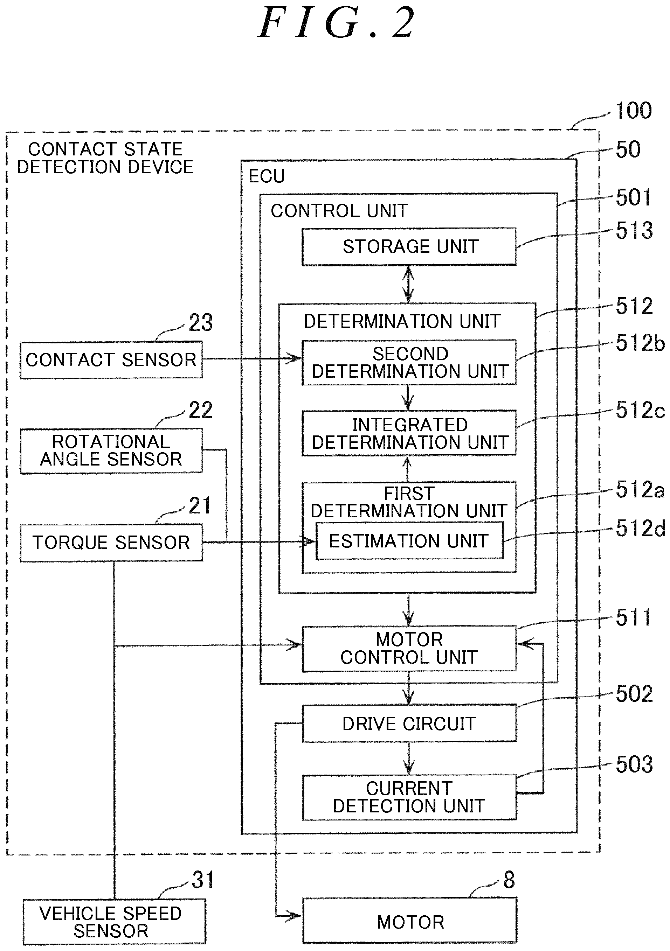

The configuration of the contact state detection device 100 that includes the ECU 50 will be described while referring to FIG. 2. FIG. 2 is a block diagram illustrating an example of the functional configuration of the contact state detection device 100 according to the first embodiment. The contact state detection device 100 includes the torque sensor 21, the rotational angle sensor 22, the contact sensor 23, and the ECU 50. The ECU 50 includes a control unit 501, a drive circuit 502, and a current detection unit 503. The control unit 501 includes a motor control unit 511, a determination unit 512, and a storage unit 513.

The drive circuit 502 is controlled by the control unit 501, and supplies electric power in a battery of the vehicle A (not illustrated) to the motor 8. The drive circuit 502 is constituted of an inverter circuit. The current detection unit 503 detects the magnitude of a motor current that is a current flowing through the motor 8, and outputs the detected value to the control unit 501. The current detection unit 503 is constituted of a circuit that measures a current etc. A variety of information can be stored in and taken out of the storage unit 513. The storage unit 513 is implemented by a storage device including a semiconductor memory such as a ROM, a RAM, and a flash memory, a hard disk drive, and a solid state drive (SSD). The storage unit 513 stores a variety of information such as thresholds, maps, and formulas that are used for the control unit 501 to operate. The storage unit 513 may store a program for the control unit 501 to operate. In the present embodiment, the storage unit 513 is included in the control unit 501 in the ECU 50. However, the storage unit 513 may be provided separately from the control unit 501, and may be disposed outside the ECU 50.

The motor control unit 511 executes drive control of the drive circuit 502 based on the vehicle speed detected by the vehicle speed sensor 31, the torque detected by the torque sensor 21, and the motor current detected by the current detection unit 503. Consequently, steering assist that matches the status of steering is achieved. Specifically, the motor control unit 511 determines a current command value based on the torque and the vehicle speed. The current command value is a target value for the motor current that flows through the motor 8. The current command value corresponds to a target value for a steering assist force (also referred to as "assist torque") that matches the status of steering. The motor control unit 511 executes the drive control of the drive circuit 502 such that the motor current detected by the current detection unit 503 approaches the current command value. The motor control unit 511 also executes the drive control of the drive circuit 502 based on the result of determination by the determination unit 512 to be discussed later. Specifically, in the case where the result of determination indicates the hands-on state, the motor control unit 511 causes the drive circuit 502 to supply electric power to the motor 8 to perform steering assist. In the case where the result of determination indicates the hands-off state, the motor control unit 511 performs steering assist, although an automatic steering function or an advanced driver assistance system (ADAS) is occasionally stopped after the driver is alarmed, for example.

The determination unit 512 determines which of the hands-on state in which the driver is gripping the steering wheel 11 and the hands-off state (hands-free state) in which the driver is not gripping the steering wheel 11 is established based on a torque value, an angle value, and information on whether or not the steering wheel 11 is contacted. The torque value is detected by the torque sensor 21. The angle value is detected by the rotational angle sensor 22. The information on whether or not the steering wheel 11 is contacted is detected by the contact sensor 23. The determination unit 512 outputs the result of determination to the motor control unit 511.

The determination unit 512 includes a first determination unit 512a, a second determination unit 512b, and an integrated determination unit 512c. The first determination unit 512a acquires the results of detection by the torque sensor 21 and the rotational angle sensor 22, and determines which of the hands-on state and the hands-off state is established for the steering wheel 11 based on the results of detection. The first determination unit 512a includes an estimation unit 512d that estimates driver torque applied to the steering wheel 11 by the driver based on the results of detection by the torque sensor 21 and the rotational angle sensor 22.

The first determination unit 512a determines which of the hands-on state and the hands-off state is established for the steering wheel 11 based on the driver torque estimated by the estimation unit 512d. Specifically, the first determination unit 512a determines that the hands-on state is established in the case where the absolute value of the driver torque is more than a first threshold, and determines that the hands-off state is established in the case where the absolute value of the driver torque is not more than the first threshold. The first determination unit 512a may take duration of the driver torque into consideration. The first determination unit 512a may determine that the hands-on state is established if a state in which the absolute value of the driver torque is more than the first threshold is continued for a first predetermined time or more, and determine that the hands-off state is established if not.

The second determination unit 512b acquires the result of detection by the contact sensor 23, and determines which of the hands-on state and the hands-off state is established for the steering wheel 11 based on the result of detection. The second determination unit 512b determines that the hands-on state is established in the case where the contact sensor 23 detects any contact with the steering wheel 11. The second determination unit 512b determines that the hands-off state is established in the case where the contact sensor 23 does not detect any contact with the steering wheel 11.

The integrated determination unit 512c outputs an integrated determination result obtained by integrating the results of determination by the first determination unit 512a and the second determination unit 512b. The integrated determination result is the result of determination by the contact state detection device 100 according to the present embodiment, as to which of the hands-on state and the hands-off state is established for the steering wheel 11.

Specifically, the integrated determination unit 512c makes an integrated determination with priority given to the determination of the hands-on state by the first determination unit 512a and the determination of the hands-off state by the second determination unit 512b. The integrated determination unit 512c determines the hands-off state as the integrated determination result in the case where the result of determination by the second determination unit 512b indicates the hands-off state. The integrated determination unit 512c determines the hands-off state as the integrated determination result in the case where the result of determination by the second determination unit 512b indicates the hands-on state and the result of determination by the first determination unit 512a indicates the hands-off state. The integrated determination unit 512c determines the hands-on state as the integrated determination result in the case where the results of determination by the first determination unit 512a and the second determination unit 512b indicate the hands-on state.

This is for the following reason. That is, the result of determination of the hands-off state by the second determination unit 512b is the most reliable, among all the results of determination. The result of determination of the hands-on state by the first determination unit 512a is more reliable than the result of determination of the hands-on state by the second determination unit 512b. The result of determination of the hands-on state by the second determination unit 512b may indicate a state in which a hand or a part of a body other than a hand (such as a leg) of the driver approaches the steering wheel without contacting the steering wheel.

In this manner, the integrated determination unit 512c determines the integrated determination result by selecting one of the results of determination by the first determination unit 512a and the second determination unit 512b in accordance with the reliability of the results of determination.

The torque detected by the torque sensor 21 may include inertia torque due to load torque that is an external force from a road surface etc., besides torque due to steering input from the driver. The estimation unit 512d estimates driver torque by removing such elements described above. The driver torque is torque applied to the steering wheel 11 by the driver. Further, the torque that is detected by the torque sensor 21 becomes zero, even if the driver is gripping the steering wheel 11, when the driver changes the direction of steering of the steering wheel 11. The estimation unit 512d determines a hands-free state after a predetermined time elapses to prevent erroneous detection in the state described above.

A method of estimating the driver torque is described in Japanese Patent Application Publication No. 2017-114324 (JP 2017-114324 A), and therefore is not described in detail. According to JP 2017-114324 A, the driver torque is detected using the torque detected by the torque sensor 21 and the rotational angle and the angular speed of a rotor of the motor 8 detected by a rotation sensor such as a resolver. The rotational angle of the rotor of the motor 8 corresponds to the steering angle detected by the rotational angle sensor 22. Therefore, in the present embodiment, the estimation unit 512d estimates the driver torque using the torque detected by the torque sensor 21 and the steering angle and the angular speed detected by the rotational angle sensor 22.

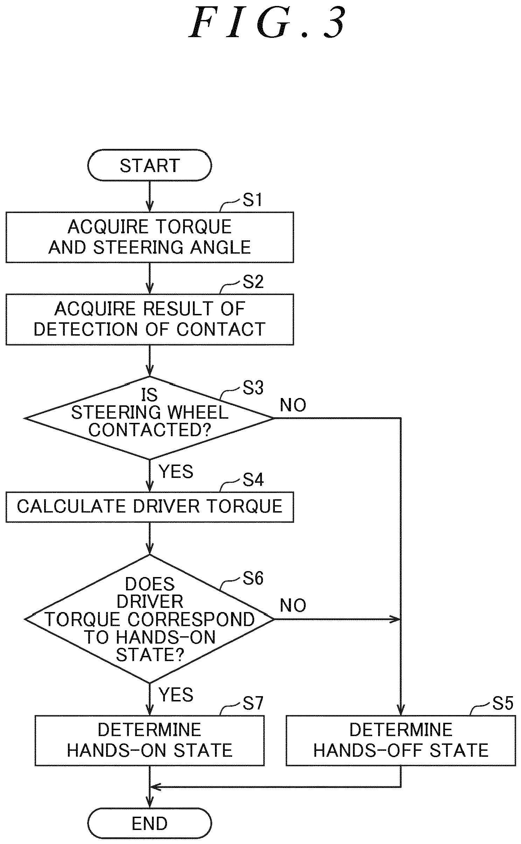

Next, operation of the contact state detection device according to the first embodiment to detect a state of contact will be described while referring to FIG. 3. FIG. 3 is a flowchart illustrating an example of operation of the contact state detection device 100 according to the first embodiment to detect a state of contact.

First, in step S1, the first determination unit 512a of the control unit 501 acquires, from the torque sensor 21 and the rotational angle sensor 22, a detected value of torque generated in the torsion bar portion 5ac and a detected value of the rotational angle, that is, the steering angle, of the steering shaft 5. Next, in step S2, the second determination unit 512b of the control unit 501 acquires, from the contact sensor 23, the result of detection as to whether or not the steering wheel 11 is contacted.

Next, in step S3, the second determination unit 512b determines whether or not the steering wheel 11 is contacted. In the case where the steering wheel 11 is contacted (Yes in step S3), the process proceeds to step S4. In the case where the steering wheel 11 is not contacted, the process proceeds to step S5.

In step S5, the integrated determination unit 512c of the control unit 501 determines that the state of contact with the steering wheel 11 is the hands-off state.

In step S4, the estimation unit 512d of the first determination unit 512a calculates driver torque using the detected values of torque and the rotational angle acquired in step S1. Next, in step S6, the first determination unit 512a determines whether or not the driver torque corresponds to the hands-on state. The driver torque corresponds to the hands-on state when the driver torque is more than the first threshold, for example. The first determination unit 512a proceeds to step S7 in the case where the driver torque corresponds to the hands-on state (Yes in step S6), and proceeds to step S5 in the case where the driver torque does not correspond to the hands-on state (No in step S6).

In step S7, the integrated determination unit 512c determines that the state of contact with the steering wheel 11 is the hands-on state.

As discussed above, the contact state detection device 100 according to the first embodiment detects the state of contact with the steering wheel 11 that serves as a steering member of the vehicle steering device 1. The contact state detection device 100 includes the torque sensor 21, the rotational angle sensor 22, the contact sensor 23, and the determination unit 512. The torque sensor 21 detects torque generated in the steering shaft 5. The rotational angle sensor 22 detects the amount of rotation of the steering wheel 11. The contact sensor 23 detects whether or not the steering wheel 11 is contacted. The determination unit 512 determines which of the hands-on state and the hands-off state is established for the steering wheel 11 based on the results of detection by the rotational angle sensor 22 and the contact sensor 23.

With the above configuration, it is possible to precisely detect whether or not steering input is applied to the steering wheel 11 from the results of detection by the torque sensor 21 and the rotational angle sensor 22. It is possible to precisely detect the hands-on state and the hands-off state using the results of detection by the torque sensor 21 and the rotational angle sensor 22 and the result of detection by the contact sensor 23. Hence, the contact state detection device 100 can improve the precision of detection of the state of contact with the steering wheel 11.

The contact state detection device 100 according to the first embodiment further includes the first determination unit 512a and the second determination unit 512b. The first determination unit 512a determines which of the hands-on state and the hands-off state is established for the steering wheel 11 based on the results of detection by the torque sensor 21 and the rotational angle sensor 22. The second determination unit 512b determines which of the hands-on state and the hands-off state is established for the steering wheel 11 based on the result of detection by the contact sensor 23. The determination unit 512 may determine the hands-on state or the hands-off state using the results of determination by the first determination unit 512a and the second determination unit 512b.

With the above configuration, the first determination unit 512a determines the hands-on state and the hands-off state based on whether or not steering input is applied to the steering wheel 11. The second determination unit 512b determines the hands-on state and the hands-off state based on whether or not the steering wheel 11 is contacted. The determination unit 512 makes a determination by integrating the results of determination by the first determination unit 512a and the second determination unit 512b. Therefore, it is possible to precisely detect the hands-on state and the hands-off state.

In the contact state detection device 100 according to the first embodiment, the first determination unit 512a includes the estimation unit 512d that estimates driver torque applied to the steering wheel 11 by the driver based on the results of detection by the torque sensor 21 and the rotational angle sensor 22. The first determination unit 512a may determine which of the hands-on state and the hands-off state is established for the steering wheel 11 based on the result of estimation by the estimation unit 512d.

With the above configuration, the estimation unit 512d can precisely estimate steering input applied to the steering wheel 11 by the driver as the driver torque. Hence, the precision of determination by the first determination unit 512a is improved.

In the contact state detection device 100 according to the first embodiment, the determination unit 512 may determine the hands-on state in accordance with the result of determination by the first determination unit 512a that is one of the first determination unit 512a and the second determination unit 512b, and determine the hands-off state in accordance with the result of determination by the second determination unit 512b that is the other of the two determination units.

With the above configuration, the determination unit 512 makes a determination by selecting the result of determination by one of the first determination unit 512a and the second determination unit 512b. For example, the precision of determination of the hands-on state by the first determination unit 512a is higher than that by the second determination unit 512b. The precision of determination of the hands-off state by the second determination unit 512b is higher than that by the first determination unit 512a. Therefore, the determination unit 512 can determine the hands-on state and the hands-off state with an improved determination precision using a result of determination with a higher determination precision.

In the contact state detection device 100 according to the first embodiment, the first determination unit 512a of the ECU 50 makes a determination using the first threshold. However, the present invention is not limited thereto. For example, the first determination unit 512a may make a determination using the first threshold and a threshold that is different from the first threshold. Specifically, the first determination unit 512a distinguishes a "hands-on state (state ST1) in which the driver torque is more than a threshold", a "hands-on state (state ST2) in which the driver torque is equal to or less than the threshold", a "hands-off state (state ST3) in which the driver torque is equal to or less than the threshold", and a "hands-off state (state ST4) in which the driver torque is more than the threshold". The state ST1 is a hands-on state in which the absolute value of the driver torque is more than a first threshold Ta. Examples of the first threshold Ta include a value within the range of 0.1 Nm or more and 0.5 Nm or less. The state ST2 is a hands-on state in which the absolute value of the driver torque is equal to or less than the first threshold Ta. The state ST3 is a hands-off state in which the absolute value of the driver torque is equal to or less than the first threshold Ta. The state ST4 is a hands-off state in which the absolute value of the driver torque is more than the first threshold Ta.

When the absolute value of the driver torque is more than the first threshold Ta at the start of computation, the first determination unit 512a determines that the state of contact is the state ST1. Then, the first determination unit 512a sets an output signal to "1", and sets a time counter value to "0". The output signal is a signal that represents the result of determination. The output signal "1" indicates that the result of determination is a hands-on state. The output signal "0" indicates that the result of determination is a hands-off state.

When the absolute value of the driver torque becomes equal to or less than the first threshold Ta in the state ST1, the first determination unit 512a determines that the state of contact has become the state ST2. Then, the first determination unit 512a sets the output signal to "1". Further, each time a predetermined time ts (seconds) elapses while the state ST2 is determined, the first determination unit 512a updates the time counter value to a value obtained by adding ts to the current value.

When the absolute value of the driver torque becomes more than the first threshold Ta before the time counter value reaches a second threshold Tb in the state ST2, the first determination unit 512a determines that the state of contact has become the state ST1, and sets the time counter value to "0".

When the time counter value reaches the second threshold Tb before the absolute value of the driver torque becomes more than the first threshold Ta in the state ST2, the first determination unit 512a determines that the state of contact has become the state ST3. Then, the first determination unit 512a sets the output signal to "0", and sets the time counter value to "0". Examples of the second threshold Tb include a value within the range of 0.5 seconds or more and 5.0 seconds or less.

When the absolute value of the driver torque becomes more than the first threshold Ta in the state ST3, the first determination unit 512a determines that the state of contact has become the state ST4. Then, the first determination unit 512a sets the output signal to "0". Further, each time the predetermined time ts (seconds) elapses while the state ST4 is determined, the first determination unit 512a updates the time counter value to a value obtained by adding ts to the current value.

When the absolute value of the driver torque becomes equal to or less than the first threshold Ta before the time counter value reaches a third threshold Tc in the state ST4, the first determination unit 512a determines that the state of contact has become the state ST3, and sets the time counter value to "0". Examples of the third threshold Tc include a value within the range of 0.05 seconds or more and 0.1 seconds or less.

When the time counter value reaches the third threshold Tc before the absolute value of the driver torque becomes equal to or less than the first threshold Ta in the state ST4, the first determination unit 512a determines that the state of contact has become the state ST1. Then, the first determination unit 512a sets the output signal to "1", and sets the time counter value to "0".

When the absolute value of the driver torque is equal to or less than the first threshold Ta at the start of computation, the first determination unit 512a determines that the state of contact is the state ST3. Then, the first determination unit 512a sets the output signal to "0", and sets the time counter value to "0".

A contact state detection device 200 according to a second embodiment differs from the first embodiment in the configuration of an integrated determination unit 2512c of a control unit 2501. The second embodiment will be described below mainly regarding differences from the first embodiment, with similarities between the first and second embodiments omitted.

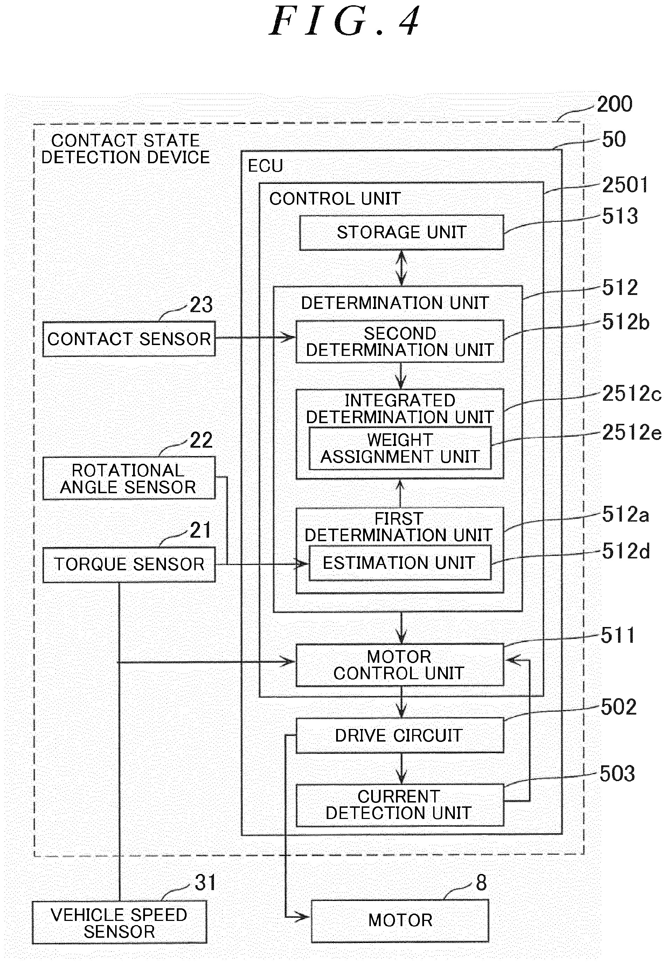

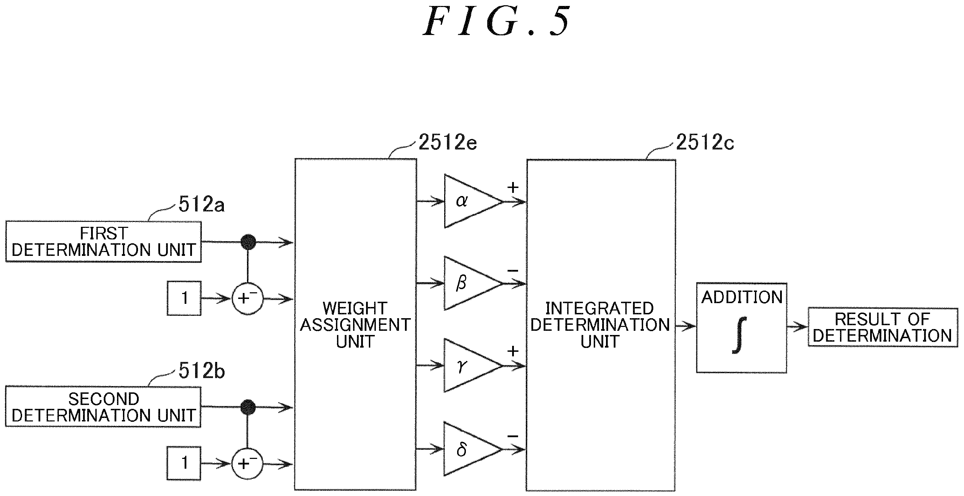

The configuration of the contact state detection device 200 according to the second embodiment will be described while referring to FIGS. 4 and 5. FIG. 4 is a block diagram illustrating an example of the functional configuration of the contact state detection device 200 according to the second embodiment. FIG. 5 is a block diagram illustrating an example of the flow of a process performed by various constituent elements of the contact state detection device 200 according to the second embodiment. The contact state detection device 200 includes the torque sensor 21, the rotational angle sensor 22, the contact sensor 23, and the ECU 50. The ECU 50 includes the control unit 2501, the drive circuit 502, and the current detection unit 503. The control unit 2501 includes the motor control unit 511, a determination unit 2512, and the storage unit 513. The determination unit 2512 includes the first determination unit 512a, the second determination unit 512b, and the integrated determination unit 2512c.

The integrated determination unit 2512c includes a weight assignment unit 2512e that assigns a weight to the results of determination by the first determination unit 512a and the second determination unit 512b. The integrated determination unit 2512c integrates the results of determination by the first determination unit 512a and the second determination unit 512b to which a weight has been assigned by the weight assignment unit 2512e. The integrated determination unit 2512c determines which of the hands-on state and the hands-off state is established for the steering wheel 11 based on the integrated results of detection.

Specifically, the first determination unit 512a outputs an output signal value "1" to the weight assignment unit 2512e in the case where it is determined that the hands-on state for the steering wheel 11 is established. The first determination unit 512a outputs an output signal value "0" to the weight assignment unit 2512e in the case where it is determined that the hands-off state is established. The second determination unit 512b outputs an output signal value "1" to the weight assignment unit 2512e in the case where it is determined that the hands-on state for the steering wheel 11 is established. The second determination unit 512b outputs an output signal value "0" to the weight assignment unit 2512e in the case where it is determined that the hands-off state is established.

The first determination unit 512a and the second determination unit 512b store, in the storage section 513, the output signal value and a time of detection at which the result of detection used to determine the output signal value is acquired by the torque sensor 21, the rotational angle sensor 22, or the contact sensor 23 in correlation with each other.

The weight assignment unit 2512e sets a value "$\alpha$" that indicates a weight to the output signal value "1" acquired from the first determination unit 512a, and outputs the weight value $\alpha$ to the integrated determination unit 2512c as a first determination value. The weight assignment unit 2512e sets a value "$\beta$" that indicates a weight, to the output signal value "0" acquired from the first determination unit 512a, and outputs the weight value $\beta$ to the integrated determination unit 2512c as the first determination value. Both the weight values $\alpha$ and $\beta$ are values of 0 or more and 1 or less. However, the present invention is not limited thereto. Further, as discussed above in relation to the first embodiment, the result of determination of the hands-on state by the first determination unit 512a is more reliable than the result of determination of the hands-on state by the second determination unit 512b, and therefore $\alpha$ is larger than $\beta$ in the present embodiment. However, the present invention is not limited thereto.

The weight assignment unit 2512e sets a value "$\gamma$" that indicates a weight to the output signal value "1" acquired from the second determination unit 512b, and outputs the weight value $\gamma$ to the integrated determination unit 2512c as a second determination value. The weight assignment unit 2512e sets a value "$\delta$" that indicates a weight to the output signal value "0" acquired from the second determination unit 512b, and outputs the weight value 8 to the integrated determination unit 2512c as the second determination value. Both the weight values $\gamma$ and $\delta$ are values of 0 or more and 1 or less. However, the present invention is not limited thereto. Further, the result of determination of the hands-off state by the second determination unit 512b is the most reliable of the results of determination by the first determination unit 512a and the second determination unit 512b. Therefore, in the present embodiment, $\delta$ is larger than $\gamma$ and $\delta$ is larger than $\alpha$. Further, the result of determination of the hands-on state by the second determination unit 512b is less reliable than the result of determination of the hands-on state by the first determination unit 512a, and therefore $\gamma$ is smaller than $\alpha$. That is, $\delta$ is larger than $\alpha$, and $\alpha$ is larger than $\beta$ and $\gamma$. However, the present invention is not limited thereto.

In addition, the weight assignment unit 2512e stores, in the storage section 513, the determination values $\alpha$, $\beta$, $\gamma$, and $\delta$ in correlation with the output signal value used to determine the determination values and the time of detection corresponding to the output signal value.

The integrated determination unit 2512c calculates a time integral of the sum of the first determination value $\alpha$ or $\beta$ and the second determination value $\gamma$ or $\delta$ that are acquired from the weight assignment unit 2512e, and determines which of the hands-on state and the hands-off state is established for the steering wheel 11 based on the integral value. The determination values that are not acquired are "0". The integrated determination unit 2512c is an example of an addition unit.

The cycle of computation by the integrated determination unit is set to be longer than the cycle of computation of the detected values of the sensors. The integral value is divided by a constant so as to have an absolute value of 1 or less. This is defined as an added value It. The constant is set in accordance with the values of $\alpha$, $\beta$, $\gamma$, and $\delta$.

The integrated determination unit 2512c determines that the hands-on state for the steering wheel 11 is established in the case where the added value It is equal to or more than a fourth threshold, and determines that the hands-off state is established in the case where the added value It is less than the fourth threshold. The fourth threshold is a positive value of more than 0 and 1 or less.

When calculating a time integral, the integrated determination unit 2512c may estimate, with respect to the time, the linear shape of the sum of a plurality of first determination values and second determination values that are included in an addition period t, and integrate a function that indicates the estimated linear shape. The integrated determination unit 2512c may simply add a plurality of first determination values and second determination values included in the addition period t.

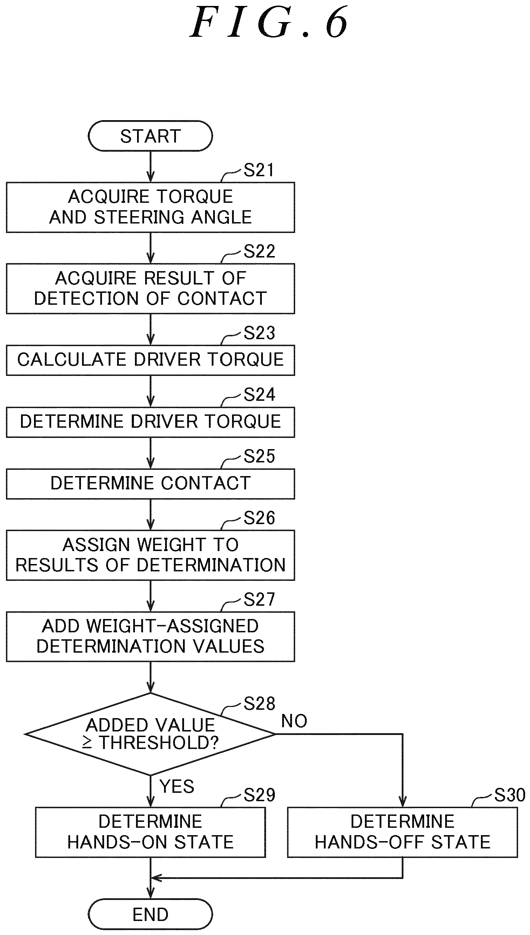

Next, operation of the contact state detection device 200 according to the second embodiment to detect a state of contact will be described while referring to FIG. 6. FIG. 6 is a flowchart illustrating an example of operation of the contact state detection device 200 according to the second embodiment to detect a state of contact.

First, in step S21, the first determination unit 512a acquires detected values of torque and the steering angle from the torque sensor 21 and the rotational angle sensor 22. Next, in step S22, the second determination unit 512b acquires, the result of detection as to whether or not the steering wheel 11 is contacted from the contact sensor 23.

Next, in step S23, the estimation unit 512d of the first determination unit 512a calculates driver torque using the detected values of torque and the steering angle acquired in step S21. Next, in step S24, the first determination unit 512a determines whether or not the driver torque corresponds to the hands-on state. The first determination unit 512a outputs an output value "1" to the weight assignment unit 2512e in the case where the driver torque corresponds to the hands-on state, and outputs an output value "0" to the weight assignment unit 2512e in the case where the driver torque does not correspond to the hands-on state.

Next, in step S25, the second determination unit 512b determines whether or not the state of contact with the steering wheel 11 corresponds to the hands-on state, that is, whether or not the steering wheel 11 is contacted. The second determination unit 512b outputs an output value "1" to the weight assignment unit 2512e in the case where the steering wheel 11 is contacted, and outputs an output value "0" to the weight assignment unit 2512e in the case where the steering wheel 11 is not contacted.

Next, in step S26, the weight assignment unit 2512e applies a weight value to each of the output values acquired from the first determination unit 512a and the second determination unit 512b, and outputs the weight value to the integrated determination unit 2512c as the first determination value and the second determination value. Specifically, the weight assignment unit 2512e outputs the first determination value and the second determination value indicated in Table 1 below.

[Table 1]

Table 1: Relationship between states and determination values

| Driver torque | | Contact | | First determination value | Second determination value | Sum |
|---|---|---|---|---|---|---|
| Hands-on state | Hands-off state | Yes | No | | | |
| ○ | × | ○ | × | α | γ | α + γ |
| ○ | × | × | ○ | α | δ | α - δ |
| × | ○ | ○ | × | β | γ | - β + γ |
| × | ○ | × | ○ | β | δ | - β - δ |

Next, in step S27, the weight assignment unit 2512e acquires the first determination values and the second determination values acquired earlier than step S26, by referencing the storage unit 513. The weight assignment unit 2512e calculates a time integral of the sum of the first determination values and the second determination values acquired in step S26 and acquired previously over the addition period t as indicated in Formula 1 shown in [0090]. Then, the weight assignment unit 2512e outputs the added value It to the integrated determination unit 2512c.

Next, in step S28, the integrated determination unit 2512c determines whether or not the added value It is equal to or more than the fourth threshold. The integrated determination unit 2512c proceeds to step S29 in the case where the added value It is equal to or more than the fourth threshold (Yes in step S28), and proceeds to step S30 in the case where the added value It is less than the fourth threshold (No in step S28).

In step S29, the integrated determination unit 2512c determines that the state of contact with the steering wheel 11 is the hands-on state. In step S30, meanwhile, the integrated determination unit 2512c determines that the state of contact with the steering wheel 11 is the hands-off state.

The other configuration and operation of the contact state detection device 200 according to the second embodiment are the same as those according to the first embodiment, and therefore are not described. With the contact state detection device 200 according to the second embodiment, the same effect as the first embodiment can be obtained.

Further, in the contact state detection device 200 according to the second embodiment, the determination unit 512 may calculate a first determination value by assigning a weight to the result of determination by the first determination unit 512a, calculate a second determination value by assigning a weight to the result of determination by the second determination unit 512b, and determine the hands-on state or the hands-off state using the first determination value and the second determination value.

With the above configuration, there may be a difference in the precision of determination of the hands-on state and the hands-off state between the first determination unit 512a and the second determination unit 512b. The above determination precision can be reflected in weight assignment to the first determination value and the second determination value. For example, a larger weight may be assigned as the determination precision is higher. Consequently, it is possible to improve the precision of determination by the determination unit 512.

In the contact state detection device 200 according to the second embodiment, the assigned weights may correspond to the reliability of the results of detection by the torque sensor 21, the rotational angle sensor 22, and the contact sensor 23. With the above configuration, the precision of determination of the first determination value and the second determination value may depend on the properties of the torque sensor 21, the rotational angle sensor 22, and the contact sensor 23, that is, the reliability of the result of detection thereby. Hence, the weights can be assigned in accordance with the properties of the torque sensor 21, the rotational angle sensor 22, and the contact sensor 23.

The contact state detection device 200 according to the second embodiment further includes the integrated determination unit 2512c that serves as an addition unit that outputs the result of addition of the first determination value and the second determination value. The determination unit 512 may determine the hands-on state or the hands-off state based on the result of addition. With the above configuration, the process of determination by the determination unit 512 is simplified.

In the contact state detection device 200 according to the second embodiment, the integrated determination unit 2512c may output a result of addition obtained by calculating a time integral of the sum of the first determination value and the second determination value. With the above configuration, the determination unit 512 makes a determination using the result of addition of a plurality of first determination values and second determination values. Consequently, the determination unit 512 makes a determination using first determination values and second determination values obtained during the integration time for a time integral, rather than a single first determination value and a single second determination value. The hands-on state and the hands-off state are continued for a certain period of time, rather than for a moment, and therefore the determination unit 512 can determine the hands-on state and the hands-off state highly precisely.

In the contact state detection device 200 according to the second embodiment, the integrated determination unit 2512c may normalize and output the result of addition. With the above configuration, the absolute value of the normalized result of addition is included in the range of 0 or more and 1 or less. Hence, the process of determination of the result of addition by the determination unit 512 is simplified.

In the contact state detection device 200 according to the second embodiment, the determination unit 512 may determine the hands-on state in the case where the result of addition is equal to or more than a threshold, and determine the hands-off state in the case where the result of addition is less than the threshold. With the above configuration, the process of determination of the result of addition by the determination unit 512 is simplified.

In the contact state detection device 200 according to the second embodiment, the integrated determination unit 2512c determines the hands-on state and the hands-off state based on the added value It obtained by calculating a time integral of the sum of the first determination value and the second determination value. However, the present invention is not limited thereto.

For example, the integrated determination unit 2512c may determine the hands-on state and the hands-off state based on an added value obtained by simply adding the sum of the first determination value and the second determination value as indicated in Formula 2 shown in [0092]. Also in this case, the integrated determination unit 2512c may determine that the hands-on state is established in the case where the added value is equal to or more than a threshold, and determine that the hands-off state is established in the case where the added value is less than the threshold.

Alternatively, the integrated determination unit 2512c may determine the hands-on state and the hands-off state based on the sum of one of the first determination values $\alpha$ and $\beta$ acquired from the result of determination by the first determination unit 512a, and one of the second determination values $\gamma$ and $\delta$ acquired from the result of determination by the second determination unit 512b. Also in this case, the integrated determination unit 2512c may determine that the hands-on state is established in the case where the sum "$\alpha - \beta + \gamma - \delta$" of the first determination value and the second determination value is equal to or more than a threshold, and determine that the hands-off state is established in the case where the sum is less than the threshold. In "$\alpha - \beta + \gamma - \delta$", the determination values that are not acquired are "0". In this case, this determination can be applied to the first embodiment. The threshold can be "1" with $\alpha = 1$, $\beta = 0$, $\gamma = 0$, and $\delta = 0$.

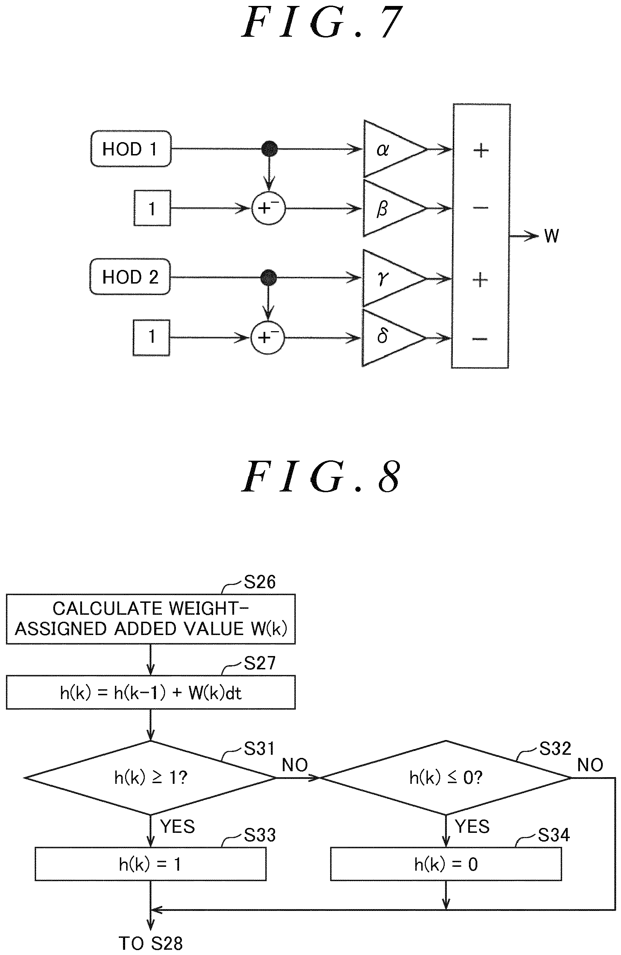

FIG. 7 is a block diagram illustrating the function of a contact state detection device 200 according to a third embodiment. FIG. 8 illustrates a characteristic portion of the flow of operation of the contact state detection device 200 according to the third embodiment.

In the third embodiment, a value between 0 and 1 is output as the result of determination by the first determination unit 512a and the second determination unit 512b. Also in the third embodiment, however, as in the second embodiment, an output signal value "1" may be output in the case where the first determination unit 512a determines that the hands-on state for the steering wheel 11 is established, and an output signal value "0" may be output in the case where the first determination unit 512a determines that the hands-off state is established. Also in the third embodiment, further, as in the second embodiment, an output signal value "1" may be output in the case where the second determination unit 512b determines that the hands-on state for the steering wheel 11 is established, and an output signal value "0" may be output in the case where the second determination unit 512b determines that the hands-off state is established. Examples of the case where a value between 0 and 1 is output as the result of determination include a case where an analog output value from the contact sensor 23 is normalized and a case where the estimated driver torque is normalized.

In step S26, a weight-assigned added value is computed by the following formula.

$$W(k) = HOD1 \cdot \alpha - (1 - HOD1) \cdot \beta + HOD2 \cdot \gamma - (1 - HOD2) \cdot \delta$$

In the formula,

W(k): weight-assigned added value (current value) at the current computation timing, HOD1: result of determination by the first determination unit, HOD2: result of determination by the second determination unit,
$\alpha$: weight (value from 0 to 1) assigned to the hands-on state determined by the first determination unit,
$\beta$: weight (value from 0 to 1) assigned to the hands-off state determined by the first determination unit,
$\gamma$: weight (value from 0 to 1) assigned to the hands-on state determined by the second determination unit,
$\delta$: weight (value from 0 to 1) assigned to the hands-off state determined by the second determination unit, and
k: numerical value that represents the current computation timing.

In step S27, an integral is calculated by the following formula.

$$h(k) = h(k - 1) + W(k)dt \qquad (1)$$

$$dt = t(k) - t(k - 1)$$

In the formula,

h(k): post-addition output value (current value),
h(k - 1): post-addition output value (previous value; post-addition output value at the previous computation timing), and
dt = t(k) - t(k - 1): integration step time, where t(k) indicates the value of a time measurement counter inside a microcomputer.

In steps S31 to S34, a process of limiting the value of the post-addition output value h(k) to the range from 0 to 1 is performed.

If h(k) is equal to or more than 1 in step S31 (S31: Yes), h(k) is set to "1" in step S33. If h(k) is less than 1 in step S31 (S31: No), the process proceeds to step S32. If h(k) is equal to or less than 0 in step S32 (S32: Yes), h(k) is set to "0" in step S34. If h(k) is more than 0 in step S32 (S32: No), nothing happens. When the sequence of processes is ended, the process proceeds to step S28. The other portion of the flowchart is the same as the second embodiment. In the third embodiment, the weight-assigned added values are integrated, and the hands-on state and the hands-off state are determined based on the resulting value. However, the weight-assigned added values may not be integrated, and the hands-on state and the hands-off state may be determined based on the sum of the weight-assigned added values. In this case, the following Formula (2) is used.

$$h(k) = h(k - 1) + W(k) \qquad (2)$$

With the third embodiment, the same effect as the second embodiment can be obtained.

While the contact state detection devices etc. according to one or more aspects of the present invention have been described above based on embodiments, the present invention is not limited to the embodiments. The scope of the one or more aspects of the present invention may include a variety of modifications to the embodiments that a person skilled in the art could conceive of, and forms constructed by combining constituent elements according to different embodiments, without departing from the scope and spirit of the present invention.

For example, the contact state detection device according to the embodiments is provided in the vehicle steering device 1 in which the steering mechanism and the steered mechanism are mechanically connected to each other. However, the present invention is not limited thereto. The vehicle steering device that includes the contact state detection device may constitute a steer-by-wire system in which the steering mechanism and the steered mechanism are not mechanically connected to each other. Further, the vehicle steering device may constitute a steer-by-wire system in which the right and left wheels can be steered independently. In the above steer-by-wire system, steered mechanisms for the right and left steered wheels are not mechanically coupled to each other, or not mechanically coupled to the steering mechanism. The right and left steered mechanisms are actuated by actuators provided to the respective steered mechanisms.

The contact state detection device according to the embodiments is mounted on a vehicle. However, the present invention is not limited thereto. The contact state detection device may be mounted on any device etc. that includes a steering member. For example, the contact state detection device may be mounted on a ship or an airplane.

As discussed above, the technique of the present invention may be implemented by a system, a device, a method, an integrated circuit, a computer program, or a computer-readable storage medium such as a storage disk, and may be implemented by any combination of a system, a device, a method, an integrated circuit, a computer program, and a storage medium. Examples of the computer-readable storage medium include a non-volatile storage medium such as a CD-ROM.

For example, the processing units included in the above embodiments are implemented as a large scale integration (LSI) circuit that is typically an integrated circuit. Each of the units may be individually formed on one chip, or some or all of the units may be formed on one chip.

The integrated circuit is not limited to the LSI, and may be implemented by a dedicated circuit or a general-purpose processor. A field programmable gate array (FPGA) that is programmable after the manufacture of an LSI or a reconfigurable processor that enables reconfiguration of connection and setting of a circuit cell inside an LSI may also be used.

In the above embodiments, the constituent elements may be constituted by dedicated hardware, or implemented by executing a software program that is suitable for the constituent elements. The constituent elements may be implemented by a program execution unit, including a processor such as a CPU reading and executing a software program stored in a storage medium such as a hard disk or a semiconductor memory.

Some or all of the above constituent elements may be constituted from a removable integrated circuit (IC) card or a single module. The IC card or the module is a computer system constituted from a microprocessor, a ROM, a RAM, etc. The IC card or the module may include the above LSI or a system LSI. The IC card or the module achieves its function by the microprocessor operating in accordance with a computer program. The IC card or the module may be tamper-resistant.

A contact state detection method according to the present invention is a contact state detection method of detecting a state of contact with a steering member of a vehicle steering device, for example. This method includes: detecting torque generated in the steering member; detecting an amount of rotation of the steering member; detecting whether or not the steering member is contacted; and determining which of a hands-on state and a hands-off state is established for the steering member based on results of detection of torque in the steering member, the amount of rotation of the steering member, and contact with the steering member. Such a contact state detection method may be implemented by a processor such as a micro processing unit (MPU) and a CPU, a circuit such as an LSI, an IC card, or a single module, etc.

Further, the technique of the present invention may be implemented by a software program or a digital signal that constitutes the software program, and may be a non-temporary computer-readable storage medium that stores a program. For example, such a program causes a computer to execute a process including: acquiring a torque value generated in a steering member of a vehicle steering device; acquiring an amount of rotation of the steering member; acquiring contact information that indicates whether or not the steering member is contacted; and determining which of a hands-on state and a hands-off state is established for the steering member based on the torque value, the amount of rotation, and the contact information.

All the numbers such as the ordinal numbers and the quantities used above are examples for specifically describing the present invention, and the present invention is not limited to the numbers given as examples. The relationship of connection among the constituent elements is an example for specifically describing the present invention, and the relationship of connection for implementing the function of the present invention is not limited thereto.

The division of the functional blocks in the block diagrams is exemplary. A plurality of functional blocks may be implemented as one functional block, one functional block may be divided into a plurality of functional blocks, and some functions may be transferred to a different functional block. The similar functions of a plurality of functional blocks may be processed by a single piece of hardware or software concurrently or in a time-sharing manner.

The contact state detection device according to the present invention is useful for a device that includes a steering member.

With the contact state detection device etc. according to the present invention, it is possible to improve the precision of detection of the state of contact with a steering member.

**Claims**

1. A contact state detection device that detects a state of contact with a steering member of a vehicle steering device, the contact state detection device comprising:

   a torque detection unit that detects torque generated in the steering member;
   a rotation amount detection unit that detects an amount of rotation of the steering member;
   a contact detection unit that detects whether or not the steering member is contacted; and
   a determination unit that determines which of a hands-on state and a hands-off state is established for the steering member based on results of detection by the torque detection unit, the rotation amount detection unit, and the contact detection unit.

2. The contact state detection device according to claim 1, further comprising:

   a first determination unit that determines which of the hands-on state and the hands-off state is established for the steering member based on the results of detection by the torque detection unit and the rotation amount detection unit; and
   a second determination unit that determines which of the hands-on state and the hands-off state is established for the steering member based on the result of detection by the contact detection unit, wherein
   the determination unit determines the hands-on state or the hands-off state using results of determination by the first determination unit and the second determination unit.

3. The contact state detection device according to claim 2, wherein:

the first determination unit includes an estimation unit that estimates driver torque applied to the steering member by a driver based on the results of detection by the torque detection unit and the rotation amount detection unit; and the first determination unit determines which of the hands-on state and the hands-off state is established for the steering member based on a result of estimation by the estimation unit.

4. The contact state detection device according to claim 2 or 3, wherein the determination unit determines the hands-on state in accordance with a result of determination by one of the first determination unit and the second determination unit, and determines the hands-off state in accordance with a result of determination by the other of the first determination unit and the second determination unit.

5. The contact state detection device according to any one of claims 2 to 4, wherein the determination unit calculates a first determination value by assigning a weight to the result of determination by the first determination unit, calculates a second determination value by assigning a weight to the result of determination by the second determination unit, and determines the hands-on state or the hands-off state using the first determination value and the second determination value.

6. The contact state detection device according to claim 5, wherein the assigned weights correspond to a reliability of the results of detection by the torque detection unit, the rotation amount detection unit, and the contact detection unit.

7. The contact state detection device according to claim 5 or 6, further comprising:

an addition unit that outputs a result of addition of the first determination value and the second determination value, wherein the determination unit determines the hands-on state or the hands-off state based on the result of addition.

8. The contact state detection device according to claim 7, wherein the addition unit outputs a result of addition obtained by calculating a time integral of a sum obtained by adding the first determination value and the second determination value.

9. The contact state detection device according to claim 7 or 8, wherein the addition unit normalizes and outputs the result of addition.

10. The contact state detection device according to any one of claims 7 to 9, wherein the determination unit determines the hands-on state in the case where the result of addition is equal to or more than a threshold, and determines the hands-off state in the case where the result of addition is less than the threshold.

11. A contact state detection method of detecting a state of contact with a steering member of a vehicle steering device, the contact state detection method comprising:

detecting torque generated in the steering member; detecting an amount of rotation of the steering member; detecting whether or not the steering member is contacted; and determining which of a hands-on state and a hands-off state is established for the steering member based on results of detection of the torque in the steering member, the amount of rotation of the steering member, and whether or not the steering member is contacted.

12. A program that causes a computer to execute a process comprising:

acquiring a torque value generated in a steering member of a vehicle steering device; acquiring an amount of rotation of the steering member; acquiring contact information that indicates whether or not the steering member is contacted; and determining which of a hands-on state and a hands-off state is established for the steering member based on the torque value, the amount of rotation, and the contact information.

# FIG. 1

# FIG. 2

# *F I G . 3*

```
            ( START )
                │
                ▼         ⌐S1
    ┌─────────────────────────┐
    │     ACQUIRE TORQUE      │
    │   AND STEERING ANGLE    │
    └─────────────────────────┘
                │
                ▼         ⌐S2
    ┌─────────────────────────┐
    │     ACQUIRE RESULT OF   │
    │   DETECTION OF CONTACT  │
    └─────────────────────────┘
                │
                ▼         ⌐S3
             ◇ IS ◇                NO
        STEERING WHEEL ──────────────┐
          CONTACTED?                 │
                │ YES                │
                ▼         ⌐S4        │
    ┌─────────────────────────┐      │
    │  CALCULATE DRIVER TORQUE│      │
    └─────────────────────────┘      │
                │                    │
                ▼         ⌐S6        │
             ◇ DOES ◇                │
             DRIVER                  │
      TORQUE CORRESPOND ──── NO ─────┤
         TO HANDS-ON                 │
            STATE?                   │
                │ YES                │
                ▼         ⌐S7        ▼         ⌐S5
    ┌─────────────────────┐   ┌─────────────────────┐
    │      DETERMINE      │   │      DETERMINE      │
    │   HANDS-ON STATE    │   │   HANDS-OFF STATE   │
    └─────────────────────┘   └─────────────────────┘
                │                    │
                ◀────────────────────┘
                ▼
             ( END )
```

# FIG. 4

200

CONTACT STATE
DETECTION DEVICE

50

ECU

2501

CONTROL UNIT

513

STORAGE UNIT

512

DETERMINATION UNIT

23

CONTACT SENSOR

512b

SECOND
DETERMINATION UNIT

2512c

INTEGRATED
DETERMINATION UNIT

2512e

WEIGHT
ASSIGNMENT UNIT

22

ROTATIONAL
ANGLE SENSOR

512a

FIRST
DETERMINATION UNIT

21

TORQUE SENSOR

512d

ESTIMATION UNIT

511

MOTOR
CONTROL UNIT

502

DRIVE CIRCUIT

503

CURRENT
DETECTION UNIT

31

VEHICLE SPEED
SENSOR

8

MOTOR

*F I G . 5*

FIRST DETERMINATION UNIT — 512a

SECOND DETERMINATION UNIT — 512b

WEIGHT ASSIGNMENT UNIT — 2512e

$\alpha$ +  $\beta$ -  $\gamma$ +  $\delta$ -

INTEGRATED DETERMINATION UNIT — 2512c

ADDITION $\int$

RESULT OF DETERMINATION

# FIG.6

```
                        ┌─────────────┐
                        │    START    │
                        └──────┬──────┘
                               │         ╭─S21
                    ┌──────────▼──────────┐
                    │  ACQUIRE TORQUE     │
                    │  AND STEERING ANGLE │
                    └──────────┬──────────┘
                               │         ╭─S22
                    ┌──────────▼──────────┐
                    │   ACQUIRE RESULT OF │
                    │ DETECTION OF CONTACT│
                    └──────────┬──────────┘
                               │         ╭─S23
                    ┌──────────▼──────────┐
                    │CALCULATE DRIVER TORQUE│
                    └──────────┬──────────┘
                               │         ╭─S24
                    ┌──────────▼──────────┐
                    │DETERMINE DRIVER TORQUE│
                    └──────────┬──────────┘
                               │         ╭─S25
                    ┌──────────▼──────────┐
                    │  DETERMINE CONTACT  │
                    └──────────┬──────────┘
                               │         ╭─S26
                    ┌──────────▼──────────┐
                    │  ASSIGN WEIGHT TO   │
                    │RESULTS OF DETERMINATION│
                    └──────────┬──────────┘
                               │         ╭─S27
                    ┌──────────▼──────────┐
                    │ ADD WEIGHT-ASSIGNED │
                    │DETERMINATION VALUES │
                    └──────────┬──────────┘
                               │
```

ADD WEIGHT-ASSIGNED DETERMINATION VALUES

S28 ADDED VALUE ≥ THRESHOLD?  NO

YES

S29 DETERMINE HANDS-ON STATE

S30 DETERMINE HANDS-OFF STATE

END

# *FIG. 7*

# *FIG. 8*

Europäisches
Patentamt

European
Patent Office

Office européen
des brevets

# EUROPEAN SEARCH REPORT

Application Number

EP 19 18 5182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 184 404 A2 (JTEKT CORP [JP]) 28 June 2017 (2017-06-28) | 1-5,11, 12 | INV. B62D6/08 G01C21/36 |
| A | * paragraphs [0005], [0007]; claims; figures * | 6-10 | |
| | ----- | | |
| Y | EP 3 219 256 A1 (VALEO COMFORT & DRIVING ASSISTANCE [FR]) 20 September 2017 (2017-09-20) | 1-5,11, 12 | |
| A | * paragraphs [0002], [0026], [0027], [0032] - [0037], [0062]; claims; figures * | 6-10 | |
| | ----- | | |

TECHNICAL FIELDS
SEARCHED      (IPC)

B62D
G01C

The present search report has been drawn up for all claims

| Place of search | Date of completion of the search | Examiner |
|---|---|---|
| The Hague | 15 October 2019 | Ducher, Alban |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 18 5182

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2019

| Patent document cited in search report | | Publication date | Patent family member(s) | | Publication date |
|---|---|---|---|---|---|
| EP 3184404 | A2 | 28-06-2017 | CN | 107031711 A | 11-08-2017 |
| | | | EP | 3184404 A2 | 28-06-2017 |
| | | | EP | 3501946 A1 | 26-06-2019 |
| | | | JP | 2017114324 A | 29-06-2017 |
| | | | US | 2017183032 A1 | 29-06-2017 |
| | | | US | 2019248412 A1 | 15-08-2019 |
| EP 3219256 | A1 | 20-09-2017 | EP | 3219256 A1 | 20-09-2017 |
| | | | WO | 2017158195 A1 | 21-09-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018001907 A
- JP 2017114324 A